# EUROPÄISCHE PATENTSCHRIFT

(11) **EP 1 772 176 B1**
(45) Veröffentlichungstag und Bekanntmachung des Hinweises auf die Patenterteilung: **13.10.2010**
(21) Anmeldenummer: 06119362.9
(22) Anmeldetag: 23.08.2006
(51) Int. Cl.: B01D 33/067

(54) **Vorrichtung zum Trennen von Feststoffen aus flüssigen Medien**
Device for the separation of solids from liquids
Dispositif pour la séparation de solides des liquides

(30) Priorität: 10.10.2005 DE 102005048423
(43) Veröffentlichungstag der Anmeldung: 11.04.2007
(73) Patentinhaber: Krause, Joachim, 6486 Lauteral (DE)
(72) Erfinder: Krause, Joachim, 6486 Lauteral (DE)
(74) Vertreter: Peckmann, Ralf

(56) Entgegenhaltungen:
- EP-A- 0 723 798
- EP-A- 1 236 493
- WO-A-98/05404
- DE-B1- 1 611 122
- DE-U1- 9 200 060

## Beschreibung

Die Erfindung betrifft eine Vorrichtung zum Trennen von Feststoffen aus flüssigen Medien.

Bezweckt wird der Einsatz der erfindungsgemäßen Vorrichtung insbesondere im Bereich der Abwasserfiltration, beispielsweise von Waschwasser, das Zellulosefasern aus Baumwolle enthält, das bei maschinellem Waschen anfällt.

Zur Trennung von Feststoffen aus flüssigen Medien sind bereits Vorrichtungen bekannt, bei denen eine Trennung mit Hilfe der Schwerkraft erfolgt, beispielsweise mit Bogensieben oder Separatoren. Problematisch ist dabei jedoch, dass der zurückgehaltene Feststoff an der Sieboberfläche verbleibt und es daher erforderlich ist, zur Vermeidung von Verstopfungen den Feststoff zu entfernen. Hierzu muss der Betrieb der Vorrichtung jedes Mal unterbrochen werden. Hinzu kommt, dass das Entfernen des zurückgehaltenen Feststoffes außerordentlich aufwändig ist.

Zur Lösung des vorgeschriebenen Reinigungsproblems ist es weiterhin bekannt, bei Separatoren durch vertikales Filtern unter Vibration der Filterflächen zurückgehaltene Feststoffe zu trennen und zu entfernen. Als nachteilig ist dabei jedoch anzusehen, dass zum einen ein hoher Energieaufwand für die Durchführung der Vibration erforderlich ist, wobei zudem eine große Geräuschentwicklung auftritt. Hinzu kommt, dass bei derartigen Separatoren ein hoher Zeitaufwand zur Erneuerung der Filtersiebe und ein großer Materialverschleiß zu verzeichnen ist.

Die Offenlegungsschrift DE 20 65 886 A1 offenbart eine Vorrichtung zum Abtrennen einer Flüssigkeit aus einem schlammartigen Brei oder Gemenge mit einer liegend angeordneten länglichen, drehbaren Trommel mit perforierter Wandung und mit einer auf der Aussenseite der perforierten Wandung, diese berührend, drehbar angeordneten zylindrischen Reinigungsbürste, wobei die Reinigungsbürste frei laufend gelagert ist, so dass sie mittels der in die Perforationen der Trommel eingreifenden Enden ihrer Borsten von dieser in gegenläufigem Drehsinn mitgenommen wird.

Der Erfindung liegt die Aufgabe zugrunde, eine Vorrichtung der eingangs genannten Gattung verfügbar zu machen, mit der das Trennen mit hoher Effektivität und niedriger Geräuschentwicklung bei geringem Energieverbrauch vorgenommen werden kann.

Erfindungsgemäß wird diese Aufgabe verfahrensseitig durch die im Patentanspruch 1 genannten Merkmale gelöst.

Bevorzugte weitere Ausgestaltungen der Vorrichtung sind in den nachgeordneten Patentansprüchen 2 bis 10 angegeben.

Durch die Erfindung wird vorteilhaft ein sich drehendes Sieb verfügbar gemacht, dessen Drehachse im spitzen Winkel von der Horizontalen abweicht, also zur Horizontalen geneigt ist. Auf dem Sieb werden die Feststoffe zurückgehalten und durch Drehung des Siebes kumuliert und dann mit vorgesehenen Auswurfschaufeln entfernt. Die erfindungsgemäße Vorrichtung zeichnet sich durch einen sehr geringen Antriebsenergieverbrauch und eine äußerst niedrige Geräuschentwicklung sowie durch eine hohe Filterleistung aus und erfordert nur einen sehr geringen Wartungsaufwand, weil durch das vorgesehene Siebmaterial und die Lagerung des langsam bewegten zylindrischen Siebes bzw. des Siebzylinders nur eine geringe Verschleißbeanspruchung auftritt.

Bei einem Ausführungsbeispiel der erfindungsgemäßen Vorrichtung konnten im Vergleich zu dem zuvor beschriebenen Bogensieb und dem Separator vorteilhaft Leistungen von bis zu 12 m³/h im Vergleich zu 8 bis 10 m³/h beim Separator und 10 m³/h beim Bogensieb erreicht werden. Vorteilhaft ist auch der Flächenbedarf des Ausführungsbeispiels der Vorrichtung mit einer Größe von nur 0,7 m x 1,2 m im Vergleich zu einem Separator mit einem Flächenbedarf von 2,5 m x 2,5 m und einem Bogensieb mit einem Flächenbedarf von 1,0 m x 2,5 m. Auch der Energieaufwand zur Durchführung der Trennung ist bei der erfindungsgemäßen Vorrichtung außerordentlich positiv anzusehen, er lag bei dem Ausführungsbeispiel in der Größenordnung von 0,25 kWh, während ein Separator vergleichbarer Größe etwa einen Energieaufwand von 2,2 kW/h erfordert. Feststoffe konnten bei der erfindungsgemäßen Vorrichtung bis zu einer Größenordnung von 50 µm ebenso wie bei dem vergleichsweise untersuchten Separator zurückgehalten werden, während beim Bogensieb nur Feststoffe bis 0,25 mm zurückgehalten werden konnten.

Beim Kumulieren der Faserreste (Feststoffe) werden auch Schwebstoffe in den Faserbrei eingelagert und gebunden, die kleiner als 50 µ sind. Da sich die gelösten Schadstoffe an die Schwebstoffe anlagern und gebunden werden, ist die Filterleistung nicht nur auf die Maschenweite von 50 µ begrenzt.

Gemäß einem Aspekt der Erfindung wird in vorteilhafter Weise das Trennen von Feststoffen aus flüssigen Medien, insbesondere das Trennen von Zellulosefasern aus Baumwolle aus Waschwasser, dadurch vorgenommen, dass eine gekrümmte geneigte Siebfläche, die mit einer Filtermaterialschicht versehen wird, mit dem Feststoffe enthaltenden flüssigen Medium beschickt wird, wobei die geneigte Siebfläche um eine Achse gedreht wird, die parallel zu deren Längsachse verläuft. Hierdurch werden auf der geneigten Siebfläche zurückgehaltene Feststoffe allein unter Schwerkrafteinfluss von der Siebfläche gelöst und zu Rotationskörpern, insbesondere Kugeln, kumuliert. Diese kumulierten Rotationskörper werden dann anschließend mit Hilfe von Austragorganen entfernt.

Nach einer bevorzugten weiteren Ausgestaltung wird die Neigung der gekrümmten Siebfläche abhängig von dem Material der auf der Siebfläche angeordneten Filtermaterialschicht und/oder einem Beschickungsvolumenstrom und/oder der Bewegungsgeschwindigkeit der Siebfläche eingestellt. Hierdurch ist es vorteilhaft möglich, die Trennbedingungen an die Art des flüssigen Mediums und die Art der darin enthaltenen Feststoffe anzupassen, insbesondere hinsichtlich der Viskosität und der Feststoffgrößencharakteristika.

Es ist vorteilhaft, wenn die gekrümmte Siebfläche als Siebzylinder vorgesehen wird und überdies der Siebzylinder mit einer langsamen Drehzahl von etwa 5 bis 15 Umdrehungen pro Minute, vorzugsweise 7 Umdrehungen pro Minute gedreht wird. Dabei kann ebenso wie durch die Neigungseinstellung auch durch die Wahl der Drehzahl eine einfache Optimierung des Trennverfahrens abhängig von den Charakteristika unterschiedlicher flüssiger Medien und der darin enthaltenen Feststoffe durchgeführt werden.

Eingetragen wird das Feststoffe enthaltende flüssige Medium nach einer bevorzugten Ausgestaltung der Erfindung über ein Rohr in den unteren Bereich der Siebfläche bzw. des Siebzylinders, vorzugsweise gegen eine Prallplattenanordnung, wodurch sich vorteilhaft eine Verringerung der Temperaturabhängigkeit des Antriebs ergibt.

Gemäß der Erfindung weist die Vorrichtung zum Trennen von Feststoffen aus flüssigen Medien aus einem geneigt angeordneten Gehäuse die in Anspruch 1 genannten Merkmale auf.

Gemäß einer bevorzugten Ausgestaltung der Vorrichtung weist das Gehäuse eine Einrichtung zur Neigungseinstellung auf, die mit allen üblichen mechanischen und hydraulischen Maßnahmen verwirklicht sein kann. Bevorzugt ist wegen der Einfachheit der Ausgestaltung die Neigungseinstellung mit einer Schwenkgelenkanordnung an dem unteren Ende des Gehäuses und davon beabstandet mit einer Gewindespindelanordnung versehen. Die Neigung ist abhängig von den Parametern Filtermaterial, Volumenstrom, Art des flüssigen Mediums sowie Art des darin enthaltenen Feststoffs sowie der Drehzahl der Siebtrommel zur Optimierung der Effektivität des Trennens einstellbar.

Gemäß einer bevorzugten weiteren Ausgestaltung der Erfindung besitzt die Siebtrommel an ihrer Innenseite eine Filtermaterialschicht, welche bevorzugt aus Edelstahlgaze besteht, wobei die Edelstahlgaze beispielsweise eine Maschengröße für das Trennen von Feststoffen bis zu 50 µm aufweist. Befestigt ist das Innensieb nach einer weiteren vorteilhafte Ausgestaltung der Erfindung durch Spannen über Führungslängsstreben, die an der Siebtrommel und an deren Austragöffnung an einem Austragring befestigt sind.

Nach einer weiteren bevorzugten Ausgestaltung der Erfindung ist die Siebtrommel mit dem Feststoffe enthaltenden flüssigen Medium in ihrem unteren Bereich über ein Rohr beschickbar, das entweder durch den oberen Bereich der Austragöffnung in das Innere in den unteren Bereich der Siebtrommel eingeführt ist oder sich von der Rückseite der Siebtrommel im Bereich der Längsachse in den unteren Bereich der Siebtrommel erstreckt, wobei bevorzugt jeweils vor der Rohrmündung eine Prallplattenanordnung vorgesehen ist.

Nach einer weiteren Ausgestaltung der Erfindung weist die Siebtrommel als Austragorgane Auswurfschaufeln auf, die an dem Innenumfang der Siebtrommel abschnittsweise und in Draufsicht zu deren Längsachse bevorzugt um ca. 45° abgewinkelt und vorzugsweise an den Führungsstreben befestigt sind. Das Vorsehen dieser Auswurfschaufeln ist in praktischen Versuchen bei Faserstoffen enthaltenden flüssigen Medien als besonders wirkungsvoll erprobt worden. Es ist jedoch auch möglich, andere Austraglösungen vorzusehen, beispielsweise Schöpftaschen.

Das Vorsehen von Auswurfschaufeln ist eine außerordentlich einfache Maßnahme, die auch die Herstellungskosten der Vorrichtung nicht über Gebühr erhöht. Dabei wird beim Drehen der Trommel auch ein Bewegen der sich kumulierenden Rotationskörper abschnittsweise über den Innenumfang der sich drehenden Siebtrommel erreicht, wodurch vorteilhaft für das Kumulieren der Feststoffe nicht nur eine Bewegungskomponente in Richtung der Siebtrommeldrehung und eine Bewegungskomponente aufgrund der Neigung der Siebtrommel, sondern auch eine durch Aufprallen der kumulierten Rotationskörper überlagerte schräg in Mantelrichtung der Siebtrommel zu deren Austragöffnung gerichtete Bewegungskomponente überlagert wird. Aufgrund dieser Maßnahmen wird nicht nur ein Lösen von Feststoffen von dem Innensieb begünstigt, sondern auch der Kumulierungsvorgang zu einzelnen Rotationskörpern durch überlagerte Bewegungskomponenten verbessert. Hinzu kommt, dass zusätzliche kumulierungsfördernde Einflüsse auch durch den Zusammenprall von entstehenden Rotationskörpern, die gegebenenfalls auch unterschiedliche Größe schon erreicht haben, weiter gefördert werden.

Nach einer bevorzugten weiteren Ausgestaltung der Erfindung sind für die Lagerung der Siebtrommel radial angreifende Wälzlager vorgesehen, die eine besonders ruhige und gleichmäßige Lagerung ermöglichen. Ferner ist ein Drehantrieb vorgesehen, der bevorzugt am Gehäuse angeordnet und mit einem Keilriemen versehen ist. Hierdurch lässt sich einerseits eine Schwingungsdämpfung bei der Einleitung des Drehantriebs und andererseits auch ein geeignetes Übersetzungsverhältnis herstellen, wobei auch das Spannen des Keilriemens durch einfache Verstellmaßnahmen am Drehantrieb, beispielsweise einem Elektromotor mit 250 Watt Antriebsleistung, problemlos verwirklicht werden kann. Dabei kann der vorgesehene Keilriemen auch an dem Außenumfang der Siebtrommel angreifen, wodurch sich das Vorsehen einer separaten Riemenscheibe für die Drehtrommel erübrigt und das Einbringen eines Beschickungsrohrs im Bereich der Drehachse der Siebtrommel vereinfacht wird.

Nachfolgend wird die Erfindung unter Bezugnahme auf die beigefügten Zeichnungen näher erläutert. Es zeigen:
- Figur 1: eine schematische Seitenansicht eines Ausführungsbeispiels einer erfindungsgemäßen Vorrichtung;
- Figur 2: eine schematisierte Vorderansicht auf die Vorrichtung gemäß Figur 1 in Richtung der Mittelachse der Siebtrommel gesehen; und
- Figur 3: eine Schnittansicht durch die Siebtrommel.

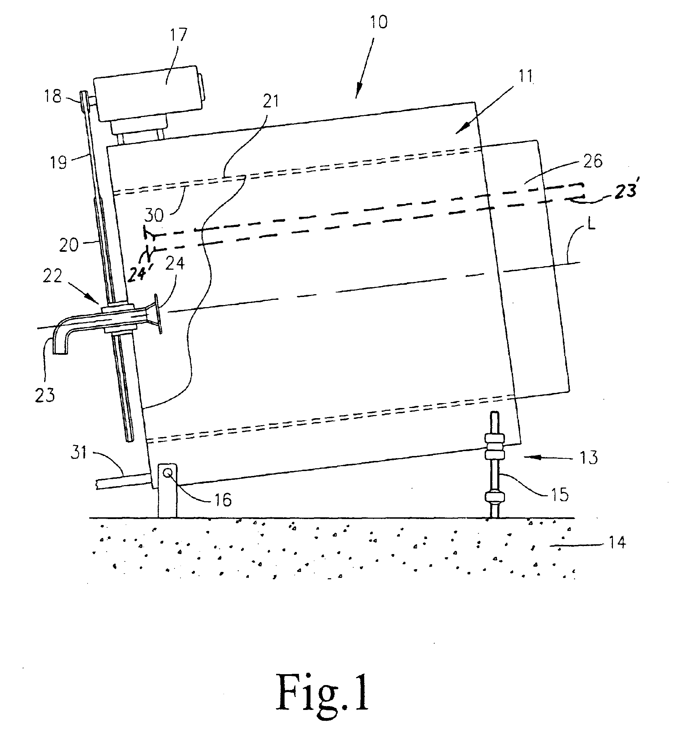

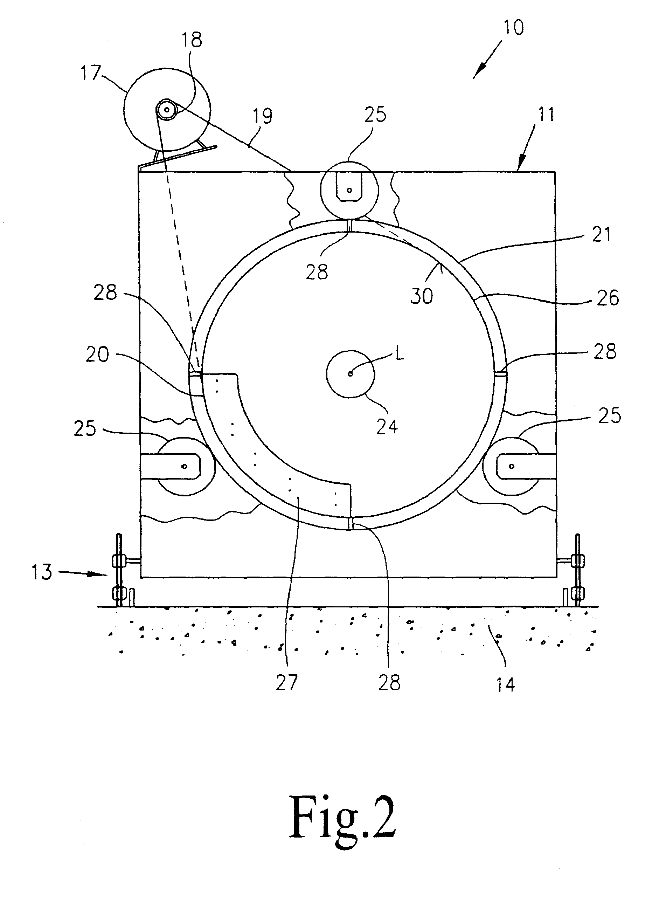

In Figur 1 ist schematisiert eine Seitenansicht einer erfindungsgemäßen Vorrichtung 10 dargestellt. Die Vorrichtung 10 weist ein geneigt angeordnetes Gehäuse 11 auf, das bis auf eine in Figur 2 angedeutete Austragöffnung 12 geschlossen ist. Das Gehäuse 11 hat bei diesem Ausführungsbeispiel eine annähernd quaderförmige Form mit einem quadratischen Querschnitt, wie in Figur 2 angedeutet, und ist ringsherum, bis auf die Austragöffnung 12 und einen Auslass 31 flüssigkeitsdicht geschlossen.

Mit 13 ist eine Einrichtung zur Neigungseinstellung angedeutet, die aus einer sich am Boden 14 abstützende Gewindespindelanordnung 15 und einer Schwenkgelenkanordnung 16 besteht. Die Schwenkgelenkanordnung 16 ist bei dem dargestellten Ausführungsbeispiel in Figur 1 am linken unteren Ende angeordnet, während die Gewindespindelanordnung 15 sich im Bereich des rechten unteren Endes gemäß Figur 1 befindet.

Auf dem Gehäuse 11 ist ein elektrischer Antriebsmotor 17 verstellbar befestigt, der über eine Riemenscheibe 18 mit einem Keilriemen 19 verbunden ist, der an der Rückseite des Gehäuses 11, in Figur 1 am linken Ende mit einer Riemenscheibe 20 in Eingriff ist, deren Durchmesser etwa der einer Innentrommel 29 entspricht. Die Riemenscheibe 20 ist über eine hohe Welle 22 abgedichtet durch die linke hintere Wand, in Figur 1 links angedeutet, des Gehäuses 11 geführt und mit der Siebtrommel 21 verbunden. Im Inneren der Hohlwelle 22 ist abgedichtet ein Rohr 23 für das Zuführen von Feststoff enthaltendem flüssigen Medium angedeutet, die im Inneren der Siebtrommel 21 eine Prallplattenanordnung 24 aufweist. Alternativ kann statt des Rohres 23 ein Rohr 23' (wie gestrichelt angedeutet) vorgesehen sein, das durch die vordere Öffnung der Siebtrommel 21 in das Innere in den unteren Bereich der Siebtrommel 21 ragt und ebenfalls eine Prallplattenanordnung 24' an der Mündung aufweist.

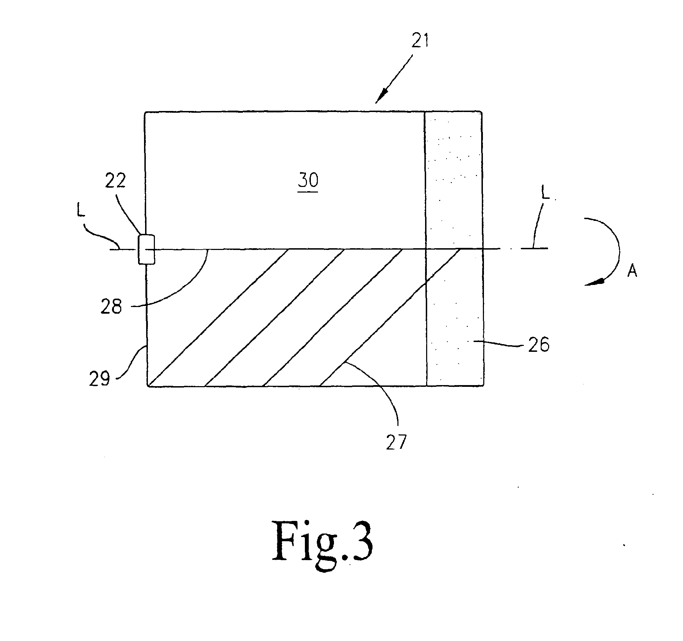

Die Siebtrommel 21 ist, wie in Figur 2 angedeutet, in dem Gehäuse 11 über drei gleichmäßig voneinander beabstandete Wälzlageranordnungen 25 zusätzlich zu der hinteren Lagerung an der mittigen Welle 22 gelagert, wobei die Wälzlageranordnungen 25 im Bereich einer in Figur 1 mit 26 angedeuteten Austragrings angeordnet sind, der an der Siebtrommel 21 befestigt ist und vorn, also in Figur 1 nach rechts aus dem Gehäuse 11 herausragt. Mit 27 ist in Figur 2 eine von mehreren Auswurfschaufeln angedeutet, die abschnittsweise über den Innenumfang der Siebtrommel 21 und in Draufsicht zu deren Längsachse L, siehe Figur 3, in einem Winkel von etwa 45° abgewinkelt an Führungslängsstreben 28 befestigt sind. Es sind insgesamt vier Führungslängsstreben 28 vorgesehen, welche sich über den Innenumfang der Siebtrommel 21 parallel zu deren Mittelachse L gleichmäßig voneinander beabstandet von dem in Figur 3 links dargestellten Boden 29 der Siebtrommel bis zum Austragring 26 erstrecken. Die Führungslängsstreben 28 dienen zur Aufspannung eines Innensiebs 30, das sich nach Art einer Innentrommel koaxial in der Siebtrommel 21 befindet und aus Edelstahlgaze mit einer Maschengröße für das Trennen von Feststoffen bis zum 50 µm besteht.

Die Auswurfschaufeln 27 sind zur Austragöffnung 12 geneigt und in der Lage, unter Berücksichtigung der Drehrichtung A, wie in Figur 3 angedeutet, kumulierte Rotationskörper aus abgetrennten Feststoffen aus dem Inneren der Siebtrommel 21 über den Austragring 26 heraus zu befördern. Die Auswurfschaufeln 27 sind zwischen den Führungsstreben 28 im Winkel von etwa 45° fest eingeschweißt.

Der Trommelantrieb über den Antriebsmotor 17 und den Keilriemen 19 erfolgt bei dem dargestellten Ausführungsbeispiel mit einer Winkelgeschwindigkeit von 18,3 cm/sek, um die Feststoffe, die sich auf der Filtergaze 30 auflegen, in einem Wasserfilm kumulieren zu können. Der Antrieb der Siebtrommel 21 erfolgt dabei bevorzugt kontinuierlich, und nach Beschickung mit dem Feststoff enthaltenden Medium entsteht durch das Auflegen der Feststoffe am Innensieb 30 im unteren Bereich eine Wasserlache, die bei langsamer Drehung das Lösen der Feststoffe von dem Innenfilter und damit das anschließende Kumulieren der Feststoffe bewirkt.

Aufgrund der versetzten abschnittsweisen Anordnung der Auswurfschaufeln 27 wird das Kumulieren dabei infolge der Drehung und der Neigung der Siebtrommel 21 unterstützt, wobei nach hinreichender Bildung von Festkörperrotationskörpern, die insbesondere kugelförmig sind. Durch das Abrollen der Feststoffkugeln in der drehenden Trommel werden die Feststoffe bis auf 80% der Restfeuchtigkeit entwässert und deren Austrag ebenfalls durch die Auswurfschaufeln 27 in eine nicht dargestellte Aufnahmeeinrichtung erfolgt. Gereinigtes Wasser läuft über den Auslass 31 am unteren Ende des Gehäuses 11 in einen nicht dargestellten Behälter.

Die Winkelgeschwindigkeit von 18,3 cm/sek betrifft bei dem dargestellten Ausführungsbeispiel eine Siebtrommel mit einem Durchmesser von etwa 50 cm. Die entsprechend zugeordnete Drehzahl beträgt 7 Umdrehungen pro Minute. In nicht dargestellter Weise kann weiterhin der Antriebsmotor 17 noch mit einer Getriebeübersetzung versehen sein und hat bei dem dargestellten Ausführungsbeispiel eine Antriebsleistung von etwa 250 Watt.

Alternativ zu der Beschickung der Siebtrommel 21 durch ein bodenseitiges mittiges Rohr 23 mit Prallplattenanordnung 24 kann auch ein Beschickungsrohr im oberen Bereich der Siebtrommel 21 durch den Austragring 26 bis in den Bereich des Bodens, in Figur 1 links angedeutet, ragen und gegebenenfalls ebenfalls mit einer Prallplattenanordnung versehen sein.

## Patentansprüche

1. Vorrichtung zum Trennen von Feststoffen aus flüssigen Medien, mit:
einem Gehäuse (11) mit einer Austragöffnung;
einer mit einem Feststoffe enthaltenden flüssigen Medium beschickbaren Siebtrommel (21), die in dem Gehäuse (11) drehbar und von der Außenseite des Gehäuses (11) antreibbar gelagert ist; und
an der Innenseite der Siebtrommel (21) angeordneten Auswurfschaufeln (27) zum Auswerfen von aus den Feststoffen kumulierten Rotationskörpern, wobei die Auswurfschaufeln (27) in Längsrichtung der Siebtrommel (21) versetzt hintereinander an einem umfänglichen Teilabschnitt der Innenseite der Siebtrommel (21) angeordnet sind,
wobei das Gehäuse (11) und die Siebtrommel (21) derart geneigt sind, dass die Austragöffnung höher angeordnet ist als der tiefste Bodenbereich des Gehäuses (11);
wobei die Vorrichtung **gekennzeichnet ist durch**:
Führungslängsstreben (28), die jeweils an einem Boden der Siebtrommel (21) und im Bereich der Austragöffnung an einem Austragring (26) befestigt sind und welche parallel zur Mittelachse (L) der Siebtrommel vorgesehen sind, und
einem Innensieb (30), das über die Führungslängsstreben (28) gespannt ist,
wobei die Auswurfschaufeln (27) zwischen den Führungsstreben (28) innerhalb des Innensiebes (30) angeordnet und an denselben befestigt sind.

2. Vorrichtung nach Anspruch 1, **dadurch gekennzeichnet, dass** das Gehäuse (11) eine Einrichtung (13) zur Neigungseinstellung aufweist.

3. Vorrichtung nach einem der Ansprüche 1 oder 2, **dadurch gekennzeichnet, dass** die Siebtrommel (21) mit dem Feststoff enthaltenden flüssigen Medium in ihrem unteren Bereich über ein Rohr (23) beschickbar ist.

4. Vorrichtung nach Anspruch 3, **dadurch gekennzeichnet, dass** das Rohr (23) in dem Bereich der Mittelachse (L) der Siebtrommel (21) mit einer Prallplattenanordnung (24) mündet.

5. Vorrichtung nach Anspruch 3, **dadurch gekennzeichnet, dass** das Rohr (23) durch die Austragöffnung der Siebtrommel (21) in das Innere der Siebtrommel (21) ragt.

6. Vorrichtung nach einem der Ansprüche 1 bis 5, **dadurch gekennzeichnet, dass** die Auswurfschaufeln (27) an dem Innenumfang der Siebtrommel (21) in Draufsicht zu deren Mittelachse (L) um ca. 45° abgewinkelt angeordnet sind.

7. Vorrichtung nach einem der Ansprüche 1 bis 6, **dadurch gekennzeichnet, dass** für die Lagerung der Siebtrommel (21) radial angreifende Wälzlager (25) vorgesehen sind.

8. Vorrichtung nach einem der Ansprüche 1 bis 7, **dadurch gekennzeichnet, dass** für die Siebtrommel (21) ein am Gehäuse (11) angeordneter Drehantrieb (17), vorzugsweise mit Keilriemen (19), vorgesehen ist.

9. Vorrichtung nach einem der Ansprüche 1 bis 8, **dadurch gekennzeichnet, dass** das Innensieb (30) aus Edelstahlgaze ist und eine Maschengröße für das Trennen von Feststoffen bis zu 50 µm aufweist.

10. Vorrichtung nach einem der Ansprüche 1 bis 9, **dadurch gekennzeichnet, dass** zu der Einrichtung (13) zur Neigungseinstellung eine Schwenkgelenkanordnung (16) an dem unteren Ende des Gehäuses (11) und davon beabstandet eine Gewindespindelanordnung (15) gehören.

## Claims

1. Device for separating solids from liquid media, comprising:
a housing (11) comprising a discharge opening;
a sieve drum (21) which can be filled with a liquid medium containing solids, which sieve drum is rotatably mounted in the housing (11) in such a way that it can be driven from the exterior of the housing (11); and
discharge blades (27) arranged on the inner surface of the sieve drum (21) for discharging bodies of rotation accumulating from the solids, the discharge blades (27) being arranged on a peripheral subportion of the inner surface of the sieve drum (21), offset one behind the other in the longitudinal direction of the sieve drum (21),
wherein the housing (11) and the sieve drum (21) are inclined in such a way that the discharge opening is arranged higher than the lowest base region of the housing (11);
wherein the device is **characterised by**:
guiding longitudinal struts (28), which are each fixed to a base of the sieve drum (21) and to a discharge ring (26) in the region of the discharge opening and are provided parallel to the central axis (L) of the sieve drum, and
an inner sieve (30) which is stretched over the guiding longitudinal struts (28),
wherein the discharge blades (27) are arranged between the guiding struts (28) inside the inner sieve (30) and are fixed thereto.

2. Device according to claim 1, characterised that the housing (11) comprises a means (13) for inclination adjustment.

3. Device according to either claim 1 or claim 2, characterised that the sieve drum (21) can be filled, in a lower region thereof, via a tube (23), with the liquid medium containing the solids.

4. Device according to claim 3, characterised that the tube (23) opens out with a deflecting plate arrangement (24) in the region of the central axis (L) of the sieve drum (21).

5. Device according to claim 3, characterised that the tube (23) projects through the discharge opening of the sieve drum (21) into the interior of the sieve drum (21).

6. Device according to any one of claims 1 to 5, characterised that the discharge blades (27) are arranged on the inner periphery of the sieve drum (21), offset by approximately 45° from the central axis (L) thereof when viewed from above.

7. Device according to any one of claims 1 to 6, **characterised in that** radially engaging roller bearings (25) are provided for mounting the sieve drum (21).

8. Device according to any one of claims 1 to 7, characterised that a rotary drive (17) arranged on the housing (11) and preferably having a V-belt (19) is provided for the sieve drum (21).

9. Device according to any one of claims 1 to 8, **characterised in that** the inner sieve (30) is made from stainless steel gauze and has a mesh size of up to 50 µm for separating solids.

10. Device according to any one of claims 1 to 9, **characterised in that** the means (13) for inclination adjustment comprises a swivel joint arrangement (16) on the lower end of the housing (11) and a threaded spindle arrangement (15) with spacing therefrom.

## Revendications

1. Dispositif destiné à séparer des matières solides d'agents liquides, avec :
- un boîtier (11) doté d'une ouverture de distribution ;
- un tambour filtrant (21) pouvant être rempli d'un agent liquide contenant des matières solides, qui est logé rotativement dans le boîtier (11) et de manière à pouvoir être entraîné à partir de la face extérieure du boîtier (11) ; et
- des aubes d'éjection (27) disposées sur la face intérieure du tambour filtrant (21) destinées à éjecter des corps rotatifs cumulés à partir des matières solides, les aubes d'éjection (27) étant disposées dans la direction longitudinale du tambour filtrant (21) en décalage les unes par rapport aux autres au niveau d'un segment partiel périphérique de la face intérieure du tambour filtrant (21), le boîtier (11) et le tambour filtrant (21) étant inclinés de telle sorte que l'ouverture de distribution se trouve plus haut que la zone de fond la plus basse du boîtier (11) ;
le dispositif étant **caractérisé par** :
- des montants de guidage longitudinaux (28), qui sont respectivement fixés à un fond du tambour filtrant (21) et fixés dans la zone de l'ouverture de distribution à un anneau d'extraction (26) et qui sont prévus parallèles à l'axe central (L) du tambour filtrant, et
- un filtre intérieur (30), qui est tendu sur les montants de guidage longitudinaux (28), les aubes d'éjection (27) étant disposées entre les montants de guidage (28) à l'intérieur du filtre intérieur (30) et étant fixées à ces derniers.

2. Dispositif selon la revendication 1, **caractérisé par le fait que** le boîtier (11) présente une dispositif (13) destiné au réglage de l'inclinaison.

3. Dispositif selon l'une des revendications 1 ou 2, **caractérisé par le fait que** le tambour filtrant (21) peut être rempli de l'agent liquide contenant de la matière solide dans sa zone inférieure par l'intermédiaire d'un tuyau (23).

4. Dispositif selon la revendication 3, **caractérisé par le fait que** le tuyau (23) débouche dans la zone de l'axe central (L) du tambour filtrant (21) avec un système de chicane (24).

5. Dispositif selon la revendication 3, **caractérisé par le fait que** le tuyau (23) fait saillie à l'intérieur du tambour filtrant (21) par l'ouverture de distribution du tambour filtrant (21).

6. Dispositif selon l'une des revendications 1 à 5, **caractérisé par le fait que** les aubes d'éjection (27) sont disposées, vues de dessus, en position pliée à env. 45° par rapport à leur axe central (L) sur la périphérie intérieure du tambour filtrant (21).

7. Dispositif selon l'une des revendications 1 à 6, **caractérisé par le fait qu'**un roulement (25) venant en prise radialement est prévu pour le logement du tambour filtrant (21).

8. Dispositif selon l'une des revendications 1 à 7, **caractérisé par le fait qu'**un organe d'entraînement en rotation (17) disposé sur le boîtier (11), préférentiellement avec une courroie trapézoïdale (19), est prévu pour le tambour filtrant (21).

9. Dispositif selon l'une des revendications 1 à 8, **caractérisé par le fait que** le filtre intérieur (30) est en gaze inoxydable et présente une taille de maille pour la séparation de matières solides allant jusqu'à 50 µm.

10. Dispositif selon l'une des revendications 1 à 9, **caractérisé par le fait qu'**un système d'articulation pivotante (16) au niveau de l'extrémité inférieure du boîtier (11) ainsi qu'un système de broche filetée (15) à distance dudit système d'articulation pivotante font partie de l'installation (13) destinée au réglage de l'inclinaison.
